# FASCICULE DE BREVET EUROPEEN

(11) **EP 1 391 148 B1**
(45) Date de publication et mention de la délivrance du brevet: **26.03.2008**
(21) Numéro de dépôt: 03292078.7
(22) Date de dépôt: 22.08.2003
(51) Int. Cl.: A01D 34/52

(54) **Machine de coupe de végéteaux en tiges, notamment tondeuse**
Mähmaschine für halmähnliche Gewächse
Mowing machine for haulm-like crops

(30) Priorité: 23.08.2002 FR 0210523
(43) Date de publication de la demande: 25.02.2004
(73) Titulaire: Coeuret, Bernard, 14310 Epinay sur Odon (FR)
(72) Inventeur: Coeuret, Bernard, 14310 Epinay sur Odon (FR)
(74) Mandataire: Cabinet HERRBURGER

(56) Documents cités:
- CA-A- 1 268 952
- FR-A- 2 075 464
- FR-A- 2 219 745
- US-A- 1 370 352
- US-A- 2 282 238
- US-A- 2 484 071
- US-A- 2 767 543
- US-A- 2 790 293
- US-A- 4 172 350

## Description

### Domaine de l'invention

La présente invention concerne une machine de coupe de végétaux en tiges telles que tondeuse, faucheuse, débroussailleuse, taille-haie telle que définie dans le préambule de la première revendication.

### Art antérieur

Il existe de multiples variantes de telles machines de coupe de végétaux notamment de tondeuses.

Ainsi, selon le document US 2 282 238, il existe une tondeuse à gazon dont le rotor porte des disques plans, parallèles, inclinés par rapport à l'axe du rotor et coopérant avec des couteaux fixes en forme de dents de scie. Mais ce type de tondeuse a l'inconvénient d'être très déséquilibré à cause du balourd créé par la forme non circulaire des disques et leur orientation parallèle. Elle ne peut tourner rapidement et le rotor est d'ailleurs entraîné par les déplacement même de la tondeuse.

Les tiges des végétaux sont immanquablement rabattues autour de l'axe par la surface constituée par chaque disque du fait que le disque change globalement d'orientation par rapport à l'axe du rotor au cours d'une rotation.

Cette situation n'est pas améliorée par la division du disque en deux moitiés d'orientation opposées car cette double discontinuité favorise encore plus l'accrochage des tiges et le bourrage du rotor.

Le document US 2 790 293 décrit également une tondeuse avec un rotor formé de doubles disques accolés, symétriques par rapport au plan médian perpendiculaire à l'axe de rotation, ces bords de ces disques forment chacun deux ou plusieurs couteaux coopérant avec les contre-couteaux.

Ces couteaux sont disposés et tournent d'une manière très particulière. En effet, les couteaux sont disposés par rapport aux contre-couteaux en forme de dents de scie, de façon que le plan de chaque double-disque passe par le fond de l'encoche formée entre deux arêtes de coupe du contre-couteau. Dans ces conditions, la jonction des deux arêtes de coupe d'un double-disque arrive d'abord au fond de cette encoche en V formée par deux contre-coutaux puis le contour du disque s'écarte progressivement du fait de sa forme en spirale et coupe les végétaux contre les arêtes de coupe en les écartant progressivement.

Mais cette disposition présente un certain nombre d'inconvénients et, en particulier, celui d'une coupe irrégulière laissant des traces puisque chaque disque d'un ensemble de deux disques ne coopèrent qu'avec un contre-couteau et sa largeur de travail ne peut dépasser celle d'un contre-couteau du fait de l'encombrement présenté par les doubles-disques sur le rotor.

Outre le fait que le résultat de la coupe est très irrégulier parce que les végétaux sont couchés plus ou moins avant d'être coupés, les végétaux peuvent également s'enrouler facilement autour de l'axe du rotor dans l'intervalle des disques en étant entraînés et retenus par les parties en saillie des disques aboutissant rapidement au bourrage du rotor et à son incapacité de fonctionner.

Enfin il existe des tondeuses à gazon, de grande précision, formées par un rotor portant des lames hélicoïdales coopérant avec une contre lame alignée suivant une génératrice du cylindre de section circulaire décrit par les lames hélicoïdales. La coupe se fait par la prise des tiges des végétaux par les lames hélicoïdales et leur cisaillement contre lame transversale.

Ces tondeuses sont fragiles et elles sont utilisées seulement dans des applications très particulières nécessitant une taille très précise, principalement sur les terrains de golf car elles n'ont à couper qu'une hauteur de végétaux extrêmement faible et surtout elles ne risquent pas de prendre un objet résistant comme un caillou qui serait automatiquement bloqué entre la lame et la contre-lame et provoquerait un dommage considérable.

L'art antérieur le plus proche (document US 2 484 071) décrit une tondeuse du type défini ci-dessus dont le rotor est formé d'un assemblage de disques plans, correspondant à une section de cylindre circulaire. Ces disques sont installés sur l'axe suivant l'inclinaison du plan de section avec le cylindre de section circulaire.

Ces différents disques constituent ainsi un rotor qui coopère avec un stator. Le stator est constitué de contre-couteaux ayant une arête en forme de V, les différentes arêtes sont jointives et forment une ligne polygonale inscrite sur le cylindre de section circulaire, théorique, à partir duquel sont définis les disques du rotor. Les disques coopèrent ainsi avec les arêtes de coupe. Mais cet appareil a un certain nombre d'inconvénients :
- les contre-couteaux en forme de V pointé vers l'avant, écartent les tiges d'herbe de sorte que la coupe des tiges se fait suivant une longueur très irrégulière,
- le mouvement de coupe est très irrégulier de sorte que le moyen d'entraînement doit fournir un couple variant très irrégulièrement, ce couple étant d'autant plus accentué à certains moments que les disques sont inclinés suivant le même angle (au moins par moitié de la largeur de coupe.

De plus, les disques de coupe font un angle très variable avec les contre-couteaux, en fonction du point de contact de ces deux organes. En outre, l'arête des couteaux ne fait pas un angle fixe par rapport la direction d'avance mais un angle variable suivant la position de rotation du couteau.

Ces différents éléments géométriques se traduisent par un fonctionnement extrêmement irrégulier de l'appareil et, par suite, la coupe laisse des touffes de hauteur irrégulière, ce qui est inacceptable pour du gazon.

En outre, les arêtes des contre-couteaux sont extrêmement difficiles réaliser et à entretenir ce qui complique la réalisation et l'utilisation d'un tel appareil, en plus du mauvais résultat de coupe.

### But de l'invention

La présente invention a pour but de remédier aux inconvénients des faucheuses ou plus généralement des machines de coupe de végétaux, connues et se propose de réaliser une machine de fabrication simple, d'utilisation et d'entretien faciles, permettant le remplacement d'éléments de fauche abîmés et dont le fonctionnement est particulièrement régulier.

### Objet et avantage de l'invention

A cet effet l'invention concerne une machine de coupe de végétaux du type défini ci-dessus selon les caractéristiques de la revendication 1.

La machine de coupe de végétaux telle que définie ci-dessus est utilisable comme tondeuse et notamment tondeuse de précision, comme faucheuse, c'est-à-dire pour couper des végétaux d'une certaine hauteur ou encore comme débroussailleuse ou comme taille-haie. Le fonctionnement est particulièrement régulier et relativement silencieux, puisque la coupe se fait par coopération d'un stator et d'un rotor, ayant un nombre important de points de contact. Les contre-couteaux peuvent être très proches les uns des autres puisqu'ils sont parallèles et leur épaisseur est celle d'une lame, c'est-à-dire qu'elle est particulièrement réduite. Cette réalisation des contre-couteaux favorise également leur résistance puisque l'arête de coupe est réalisée sur la tranche et non constituée par la surface plate comme dans le cas des contre-couteaux connus. Cette forme de contre-couteau selon l'invention favorise également la tenue des tiges à couper qui ne seront pratiquement pas courbées avant d'être coupées. La coupe qui en résulte est parfaitement régulière et plane. Le rapprochement possible des contre-couteaux, puisqu'ils sont constitués simplement par des lames, évite la pénétration des cailloux et autres objets durs qui pourraient bloquer ou gêner le fonctionnement de la machine sur des terrains non préparés ou encombrés, par exemple par le débroussaillage.

La rapprochement des arêtes de coupe des contre-couteaux résultant du rapprochement possible des contre-couteaux permet d'avoir des couteaux très plats, c'est-à-dire dont le tracé hélicoïdal correspond à un pas faible, proche du tracé de la section du cylindre de référence. Cela simplifie non seulement la fabrication mais évite surtout qu'une déformation du couteau par rapport au tracé idéal n'augmente le frottement au contact du ou des contre-couteaux.

Enfin, la multiplication des points de contact entre les couteaux et les contre-couteaux réduit le nombre de tiges de végétaux coupées à chaque action de coupe entre un couteau et un contre-couteau ce qui améliore considérablement la qualité du travail de coupe avec des coupes très précises comme celles exigées pour les terrains de golf.

Cette machine de coupe permet de couper les végétaux et de les déposer sur le sol tels qu'ils sont coupés ou de former des andains ou encore de recueillir les végétaux coupés dans un collecteur en aval du système de coupe.

En cas de bourrage, il suffit de faire tourner le rotor en sens inverse pour très rapidement débourrer la machine et continuer le travail. Cette inversion de mouvement est particulièrement simple dans le cas d'un rotor entraîné par un moteur hydraulique, par exemple alimenté par le circuit hydraulique du tracteur portant cette machine.

Dans le cas d'un moteur électrique réversible, l'inversion du mouvement est tout aussi simple.

Comme le système de coupe travaille effectivement par coupe et non par frappe, cela permet d'utiliser à rendement égal par rapport à une machine traditionnelle, un moteur de puissance beaucoup plus faible ; on peut notamment d'envisager l'utilisation d'un moteur électrique ayant l'avantage du silence de fonctionnement, pour une efficacité de coupe comparable à celle des faucheuses connues entraînées par des moteurs thermiques.

Cette machine a une construction modulaire tant du rotor que du stator ce qui simplifie considérablement l'industrialisation de la machine pour des largeurs de coupe très variables ou des applications diverses.

Cela permet notamment de réaliser une machine de coupe de grande largeur constituée par la juxtaposition de plusieurs ensembles de rotors et de stators articulés les uns par rapport aux autres ou constituant des systèmes de coupe séparés, portés par une même machine, notamment automotrice, autorisant le relevage et l'escamotage séparés de l'un ou l'autre ensemble de coupe, par exemple pour passer un obstacle sans que le véhicule portant la machine n'ait à dévier de sa trajectoire, comme par exemple pour la tonte d'une surface de gazon plantée d'arbres ou d'arbustes suivant une répartition régulière ou irrégulière.

La possibilité de réaliser une machine formée de sous-ensembles articulés ou indépendants les uns des autres permet, dans le cas de machines de grande largeur, d'épouser facilement des surfaces de terrains non planes ou relativement irrégulières, chaque ensemble pouvant suivre de manière autonome la bande de terrain qui lui est attribué pour la fauche, tout en réalisant une coupe à hauteur régulière notamment dans le cas de gazon.

Comme d'autre part les végétaux coupés peuvent être sectionnés plusieurs fois du fait même de la structure et du principe de coupe de la machine, les produits de fauche, en particulier de gazon, peuvent être en morceaux suffisamment petits pour sécher rapidement rester éventuellement sur place.

Outre la très grande simplicité de fabrication d'une telle machine de coupe, son utilisation peut être extrêmement diversifiée grâce notamment à la variation de vitesse de rotation du rotor par rapport à la vitesse de déplacement de la machine. Cela permet en particulier de couper éventuellement plusieurs fois les mêmes végétaux pour accélérer leur séchage ou leur décomposition ou encore faciliter leur collecte et ensuite leur utilisation pour la production d'humus, sans nécessiter d'intervention supplémentaire.

L'utilisation de cette machine offre également des avantages importants sur le plan de la sécurité car l'accès au rotor et surtout à la zone de coupe, c'est-à-dire la coopération entre le rotor et le stator est très protégée et peut être rendue difficilement accessible, en particulier si les contre-couteaux sont prolongés suffisamment loin vers l'avant par rapport au contour du rotor. Comme d'autre part, le dessus du rotor est capoté, l'accès à la zone dangereuse de coupe avec un doigt ou autre partie du corps comme un pied est pratiquement exclu.

De plus comme l'accès à la zone de coupe est également protégée par en dessous par la hauteur des contre-couteaux, des accidents comme ceux produits par les rotors de faucheuse à disque sont totalement exclus.

Une sécurité semblable existe vis-à-vis de la pénétration d'objets solides tels que des corps étrangers comme des cailloux qui ne peuvent atteindre que difficilement la zone de coupe puisqu'ils sont retenus par les contre-couteaux. Cela évite également que des cailloux puissent être projetés.

Enfin en cas de destruction d'un ou plusieurs couteaux ou de contre-couteaux, la réparation est particulièrement facile du fait du caractère modulaire de la construction du rotor et du stator.

De manière particulièrement avantageuse, l'arrête de coupe du couteau est plate et constituée par le bord de la tranche correspondant à l'épaisseur de la lame du couteau, appartenant à la surface cylindrique de référence.

Cette réalisation du couteau est particulièrement avantageuse du point de vue de la fabrication et de l'entretien puisque l'arête de coupe n'a pas à être affûtée, l'arête de coupe étant constituée simplement par l'intersection de la surface de la tranche de la lame du couteau et des faces latérales de cette lame.

Dans la mesure où la machine de coupe est destinée à couper des végétaux ou des produits en tige de faibles dimensions, on peut augmenter l'efficacité de la machine et sa sécurité si les contre-couteaux sont écartés d'une distance inférieure à la largeur d'un couteau. Cela permet d'ailleurs à un même couteau de coopérer avec plusieurs contre-couteaux.

Suivant une autre caractéristique avantageuse, le couteau est formé d'un moyeu de longueur axiale inférieure à la largeur du couteau et deux couteaux successifs sont montés sur l'arbre du rotor, moyeu contre moyeu.

Dans ce cas, les couteaux débordent de la largeur du moyeu et ils s'imbriquent les uns dans les autres d'un moyen à l'autre.

D'une façon particulièrement avantageuse, le rotor a une structure modulaire formée d'un arbre entraîné en rotation et portant un ensemble de couteaux emmanchés sur l'arbre et solidaires en rotation de celui-ci.

En particulier dans le cas de ce montage, la liaison solidaire en rotation entre l'arbre et les couteaux est une liaison à clavette entre au moins certains couteaux et l'arbre du rotor.

La liaison avec la clavette ou une liaison de ce type peut permettre soit l'installation des différents modules de couteaux dans la même orientation angulaire les uns à la suite des autres, soit avec un décalage, si le moyen d'assemblage est indexé.

De façon avantageuse, pour former un andain de produits coupés ou pour collecter les produits en sortie du système de coupe, le rotor comporte deux ensemble de couteaux dont l'inclinaison relative par rapport aux contre-couteaux est opposée, ces deux ensembles étant de préférence situés de part et d'autre du plan médian de la machine et symétriquement par rapport ce plan médian.

D'une manière particulièrement avantageuse, le couteau comporte plusieurs éléments identiques ayant chacun une arête de coupe et ces éléments sont répartis de manière équiangulaire sur le moyeu.

D'une manière particulièrement avantageuse dans le cas d'un couteau formé de plusieurs éléments, chaque élément a une forme de T dont le montant est relié au moyeu et la traverse porte l'arête de coupe.

Si la machine est destinée à couper des produits relativement durs, par exemple dans son application comme débroussailleuse ou taille-haie, il est avantageux de rendre tranchante l'arête de coupe des couteaux et celle des contre-couteaux et pour cela, suivant une autre caractéristique, le couteau est formé d'un disque porté par un moyeu et muni d'une paroi périphérique bordant le disque, dont l'un des côtés a un tracé en biais, notamment un tracé hélicoïdal pour former une arête de coupe, cette paroi périphérique s'inscrivant dans la surface cylindrique circulaire de référence.

Bien que dans certains cas, un tel ensemble de couteaux puisse être associé à des contre-couteaux avec des arêtes de coupe non affûtées, il est intéressant de réaliser les contre-couteaux pour des telles applications à partir d'une lame renforcée dans la direction transversale par une branche terminée par un talon et cette lame, épousant la surface cylindrique circulaire de référence, forme une arête de coupe affûtée, se terminant par une partie incurvée constituant une butée de coupe.

Cette réalisation permet une coupe efficace de végétaux relativement durs.

### Dessins

La présente invention sera décrite ci-après de manière plus détaillée à l'aide de différents modes de réalisation représentés schématiquement dans les dessins annexés dans lesquels :
- la figure 1 est une vue en perspective d'une machine de coupe équipée d'un dispositif d'attelage pour être installée sur un tracteur,
- la figure 2 est une vue de face de la machine de la figure 1,
- les figures 3 et 4 sont des vues de côté de la machine de la figure 1,
- les figures 5A et 5B sont des vues schématiques du mécanisme de coupe proprement dit c'est-à-dire du rotor et du stator,
- la figure 6 est une vue en perspective d'un rotor correspondant à la machine de la figure 2,
- la figure 7 est une vue en perspective d'un premier mode de réalisation d'une contre couteau,
- la figure 8 est une vue en perpective d'un second mode de réalisation d'un contre couteau,
- la figure 9 est une vue très schématique de détail de l'interaction d'un couteau et d'un contre-couteau,
- la figure 10 est une vue de face d'une seconde variante de machine selon l'invention,
- la figure 11 est une vue en perspective du rotor de la figure 10,
- la figure 12 est une vue de détail d'un ensemble de quelques couteaux et de contre-couteaux correspondants à un autre mode de réalisation de l'invention,
- la figure 13 est une vue de dessus en perspective d'un contre couteau du mode de réalisation de la figure 12,
- la figure 14 est une vue en perspective de dessous du contre couteau de la figure 13,
- la figure 15 est une vue de face d'un couteau pour le montage de la figure 12.
- la figure 16 est une vue en perspective du couteau de la figure 15,

### Description de différents modes de réalisation préférentiels

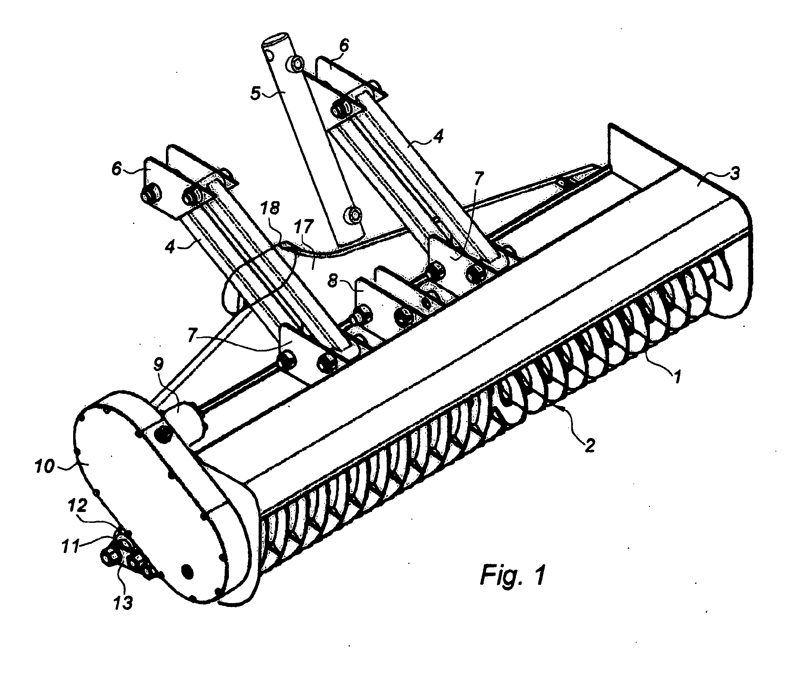

Les figures 1 à 4 montrent un premier mode de réalisation d'une machine de coupe de végétaux en tiges selon l'invention. Dans cet exemple, la machine est une tondeuse ou une faucheuse. Mais elle peut également s'utiliser comme débroussailleuse ou comme taille-haie. Cette machine est destinée à être installée par l'intermédiaire de ses moyens d'attelage sur l'attelage en trois points d'un tracteur, de préférence sur l'attelage avant. La machine étant équipée de préférence d'un moteur hydraulique, elle comporte un branchement pour être reliée au circuit hydraulique du tracteur.

De manière plus détaillée, la machine selon la figure 1 se compose d'un mécanisme de coupe formé d'un rotor porte-couteaux 1, entraîné en rotation autour d'un axe, parallèle à la surface de coupe ou de fauche et dirigé transversalement à la direction de déplacement de la machine. Ce rotor 1 coopère avec un stator 2. L'ensemble 1, 2 est monté dans un carter formant châssis 3, portant des bielles d'attelage 4 et un vérin de levage 5 ; les bielles 4 et le vérin 5 sont reliés de manière articulée au véhicule de transport tel qu'un tracteur représenté par deux chapes 6 sur lesquelles sont articulées les doubles bielles pour former, avec les attaches 7 des bielles sur le châssis 3, un double parallélogramme articulé permettant un positionnement précis de la machine puisque les réglages en hauteur par rapport au sol ou la surface à faucher la laisseront parallèle à elle-même. Le relevage ou la descente de la machine se font par le vérin 5 relié à la chape 8. Cette machine est entraînée en rotation par un moteur hydraulique 9 relié à la prise (non représentée) du circuit hydraulique du tracteur. Le moteur 9 entraîne le rotor 1 à l'aide d'une transmission, par exemple à pignons ou à courroie, logée dans le carter de transmission 10.

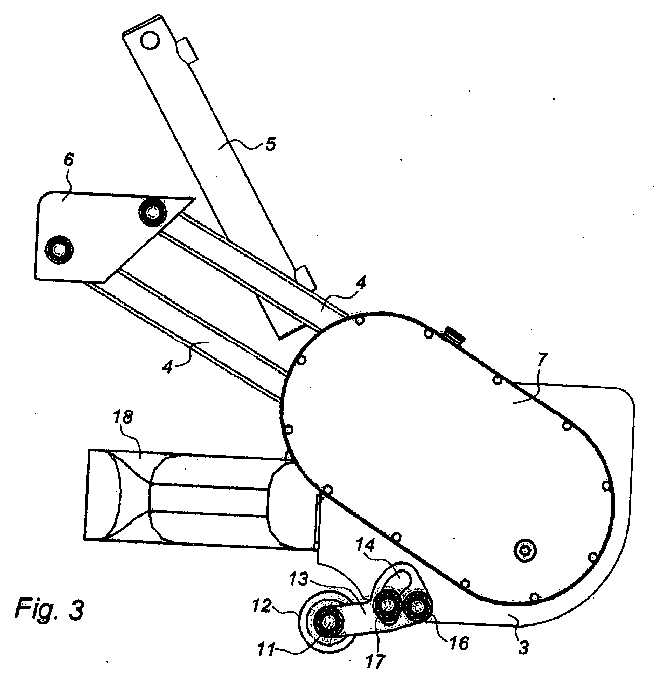

La machine décrite ci-dessus s'appuie sur le sol par l'intermédiaire d'une barre 11 munie de rouleaux 12. Cette barre 11 qui constitue l'axe des rouleaux 12 est reliée à ses extrémités par deux bras 13 au châssis 3. Un mécanisme de réglage (figure 3) est prévu pour régler la hauteur d'appui de la machine sur le sol. Ce mécanisme de réglage est constitué par un trou oblong 14 réalisé dans chacune des branches 13 auxquelles est relié l'axe 11 portant les rouleaux 12. Le trou oblong 14 centré sur un axe d'articulation 16 est traversé par une vis 17 qui permet de bloquer la position de réglage. Ce réglage définit la hauteur de coupe de la machine par ailleurs tenue par l'intermédiaire des bielles 4, le vérin 5 étant neutralisé.

La machine peut également être équipée d'un carter arrière 18 en forme de trémie munie d'une sortie relié à un tuyau pour la récupération des produits coupés.

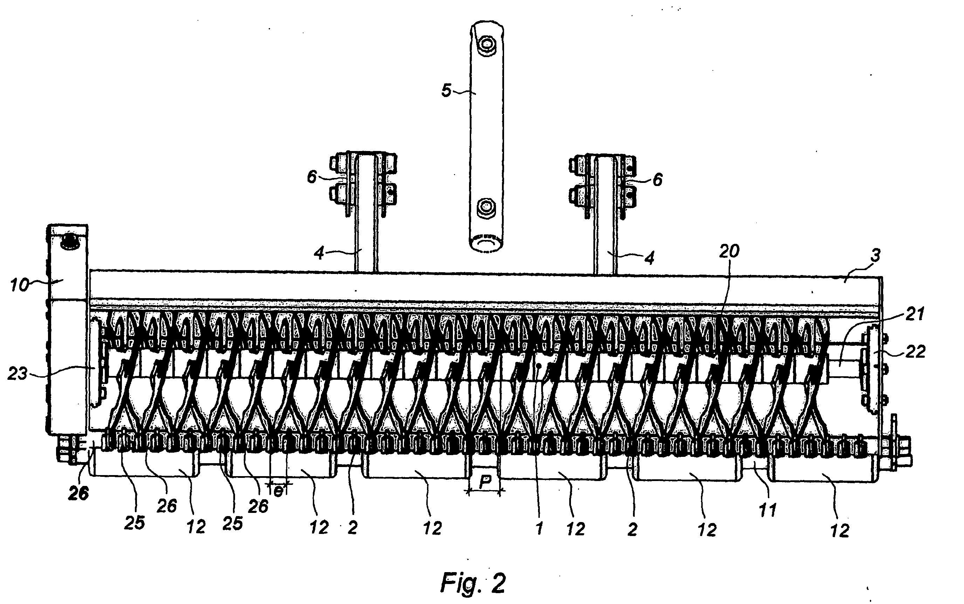

La figure 2 montre de manière plus détaillée la structure du rotor porte-couteaux 1 et celle du stator 2.

Le rotor 1 est formé par un ensemble de couteaux 20, empilés sur un axe 21 muni d'une clavette pour être entraîné en rotation par le moteur hydraulique 9. Le rotor 1 est formé d'un empilage de couteaux 20 dont les arrêtes de coupe épousent des tracés sensiblement hélicoïdaux. Ces couteaux 20 ont une forme de T dont la traverse constitue l'arête de coupe et la branche centrale est fixée à un moyeu pour l'axe du rotor. Le rotor est monté dans deux paliers d'extrémité 22, 23. Le palier 12 est situé du côté du carter de transmission. L'axe 21 du rotor le traverse et à l'intérieur du carter de transmission 10 et il porte une poulie ou roue dentée non représentée, reliée au moteur 9.

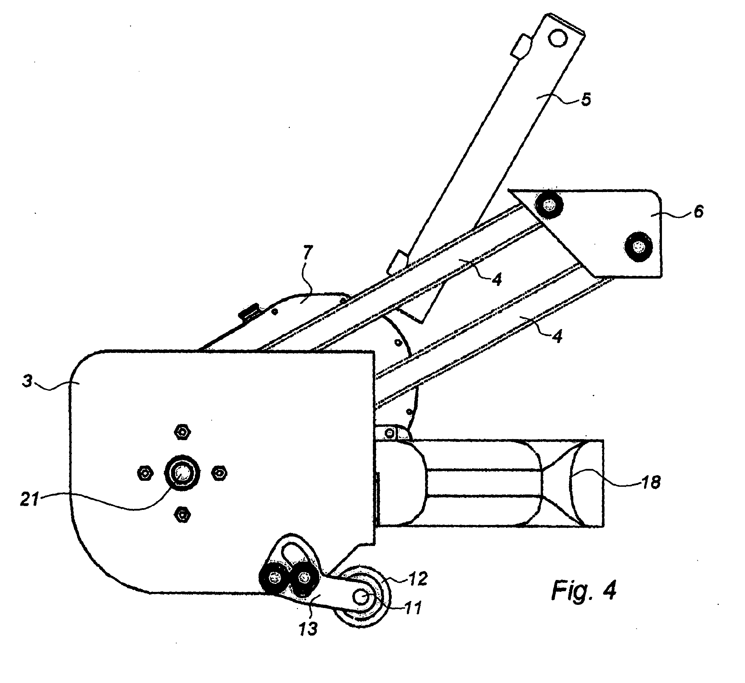

Le stator 2 est un peigne formé de contre-couteaux 25 empilés les uns contre les autres sur un ou des axes d'assemblage avec interposition d'organes d'écartement 26. Les différents moyens constituant le stator apparaissent très schématiquement à la figure 2, sous le rotor 1, alors que les vues de côté des figures 3 et 4 cachent à la fois le rotor et le stator.

Les contre-couteaux 25 sont formés de lames dont la tranche constitue l'arête de coupe, ils sont parallèles et sensiblement perpendiculaires à l'axe du rotor.

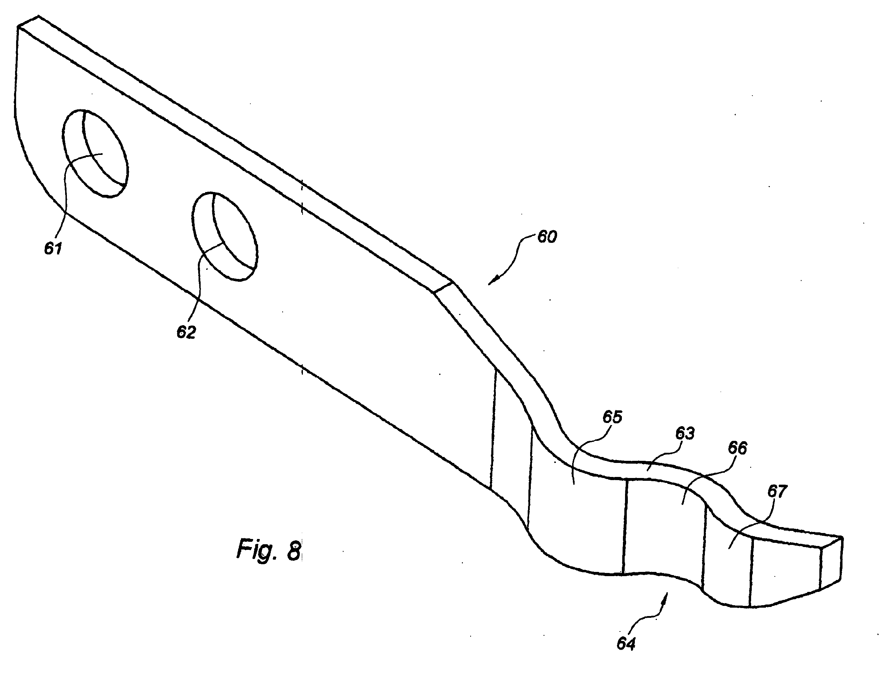

Dans le cas le plus simple, les contre-couteaux sont des lames planes. Mais comme représenté à la figure 8, ces lames peuvent également avoir une ondulation de part et d'autre du plan global de la lame. Les lames des contre-couteaux sont écartées d'une distance (e) correspondant, de préférence mais non nécessairement, à un écartement identique pour tous les contre-couteaux. Cet écartement qui constitue alors le « pas » du peigne formé par le stator 2 est inférieur à la largeur des couteaux du rotor.

Grâce à la forme particulière des contre-couteaux constitués par des lames, il est possible de diminuer l'intervalle entre les lames de manière à augmenter le nombre de points de contact avec chaque couteau. Cela est particulièrement intéressant comme déjà indiqué du point de la mécanique de coupe, de la cinématique et de l'effet de coupe. La coupe se fait pour des tiges de végétaux pratiquement verticales, nous infléchies par les surfaces larges de dents de contre-couteaux comme dans les machines connues. Les tiges ne sont pas plus ou moins couchées avant d'être coupées. De plus, comme les lames sont « verticales », c'est-à-dire debout, leurs faces latérales importantes tiennent bien les tiges et fonctionnent comme un peigne. Enfin, ces différents moyens de coupe évitent, grâce à l'efficacité de la coupe, que les végétaux ne soient plus ou moins pincés et arrachés au lieu d'être franchement coupés.

Dans l'exemple de la figure 2, la largeur des couteaux 20 ou largeur dans la direction de l'axe de la surface balayée par un couteau lors de sa rotation, est égale à la longueur axiale P de leur moyeu ; suivant d'autres modes de réalisation, les couteaux ont une largeur supérieur à celle de leur moyeu et les surfaces balayées par deux couteaux adjacents, pendant leur rotation se chevauchent.

La disposition relative des couteaux et des contre-couteaux apparaît clairement dans l'exemple de la figure 2.

Dans ce mode de réalisation du rotor, l'inclinaison de tous les couteaux 20 du rotor 1 est dirigée dans le même sens.

Cette vue laisse également apparaître les rouleaux 12 servant d'organes d'appui sur le sol et par suite de réglage en hauteur et l'axe 11. Le détail du mécanisme de coupe sera décrit ci-après à l'aide des figures 2, 5, 6 et 7.

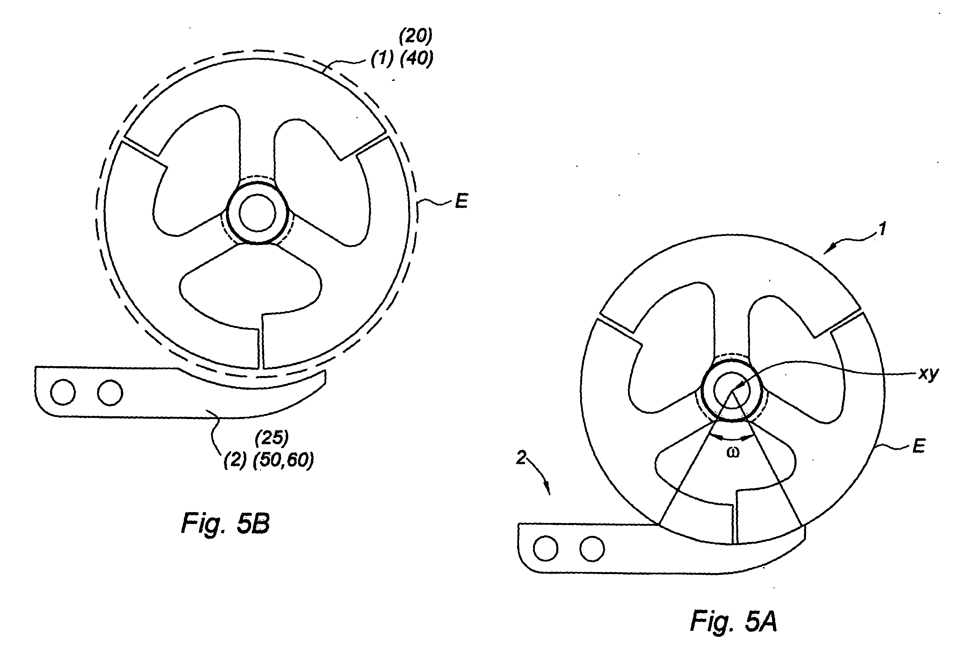

La vue de côté schématique de la figure 5A représente le rotor 1 et le stator 2 formés l'un par un empilage de couteaux, l'autre par un empilage de contre-couteaux s'inscrivant les uns et les autres dans le contour du premier couteau et celui du premier contre-couteau :

La périphérie extérieure du rotor 1 est enveloppée par une surface cylindrique de section circulaire, centrée sur l'axe XX. Cette cylindrique constitue la surface de référence E et les arêtes de coupe des couteaux du rotor 1 sont contenues dans cette surface cylindrique de référence E.

De la même manière, le stator 2 est un dispositif en forme de peigne comportant un ensemble de contre-couteaux ayant tous la même forme et dont l'arête de coupe qui coopère avec le ou les couteau(x) du stator 1 a une forme qui appartient également à la surface cylindrique de référence E. On voit ainsi que le contact entre le rotor 1 et le stator 2 ou les couteaux et les contre-couteaux correspond à un angle ω à la figure 5A.

La figure 5B est un schéma analogue à celui de la figure 5A mais déformé pour mieux mettre en évidence les caractéristiques générales du mécanisme de coupe selon l'invention. Le rotor 1 et le stator 2, en vue de côté, sont séparés d'un intervalle fictif et la surface cylindrique de référence E a été tracée en traits interrompus autour du rotor 1. En réalité, la surface enveloppe du rotor 1 et la surface enveloppant la partie active du stator 2 sont identiques à la surface de référence E qui est un cylindre de section circulaire d'axe XX. En d'autres termes, les arêtes de coupe des couteaux formant le rotor 1 et celles des contre couteaux formant le stator 2 appartiennent à cette surface cylindrique de référence E ; géométriquement il s'agit de courbes situées sur cette surface cylindrique de référence E.

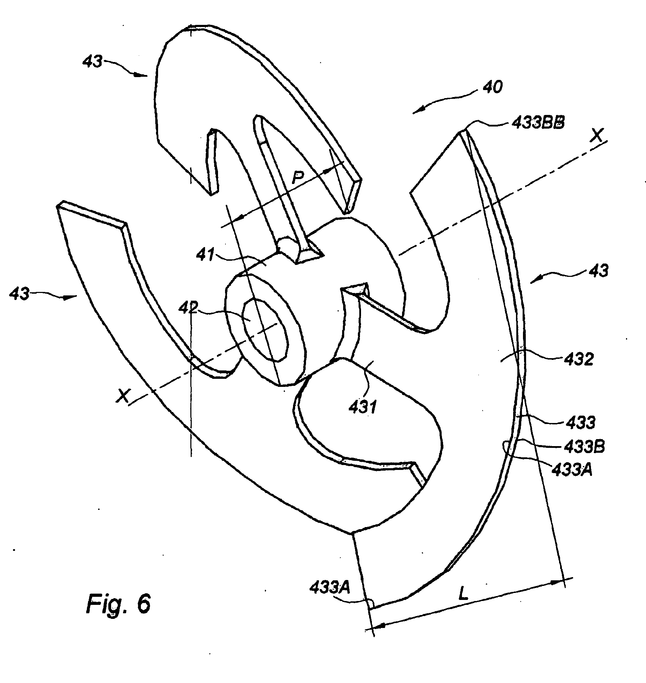

La figure 6 montre en perpective un mode de réalisation d'un couteau 40 comme celui 20 du rotor 1 de la figure 2. Le couteau 40 se compose d'un moyeu 41 pour recevoir l'axe de montage et d'entraînement passant dans le perçage 42 muni, de préférence, d'une rainure longitudinale non représentée pour recevoir une clavette. Le moyeu 41 porte trois éléments de couteau 43 identiques, sensiblement en forme de T répartis régulièrement dans la direction périphérique. Chaque élément de couteau 43 est formé d'un rayon 431 relié au moyeu 41 et d'une traverse 432 en forme de lame sensiblement hélicoïdale, dont le bord 433A ou 433B de l'arête extérieure 433 de la tranche forme l'arête de coupe suivant le sens de rotation et l'orientation des contre-couteaux. Cette arête de coupe, comme celle des deux autres éléments de couteau 43, appartient à la surface cylindrique de référence E (figure 5B).

Les arêtes de coupe 433 de ce couteau 40 ont chacune un tracé sensiblement hélicoïdal appartenant à trois hélices de même orientation ; pour une rotation de ce couteau dans le sens des aiguilles d'une montre, les arêtes de coupe communiquent au produit à couper et à ceux déjà coupés, une impulsion ayant une composante dirigée vers la droite.

Cette figure 6 permet également de présenter sur un couteau isolé 40, la longueur axiale (P) du moyeu 41 mesuré selon l'axe XX du rotor ainsi que la largeur (L) du couteau 40.

Dans l'exemple choisi, les éléments 43 formant le couteau sont identiques et leur arête de coupe 433 s'étend entre les deux extrémités 433AA, 433BB selon un tracé variant de manière continue, par exemple un tracé hélicoïdal. La largeur du couteau 40 est alors la distance entre les deux extrémités 433AA, 433BB de l'arête de coupe 433 d'un élément 43 ; cette distance est mesurée suivant l'axe XX.

Suivant le cas, la largeur (L) est égale ou, de préférence, supérieure à la longueur axiale (P) du moyeu 41.

La longueur (P) est importante pour l'assemblage du rotor 1. La largeur (L) et la distance (e) des contre-couteaux définissent le nombre de contacts entre les couteaux et les contre-couteaux. La largeur L est aussi la largeur de la surface cylindrique balayée par un couteau, c'est-à-dire ses arêtes de coupe au cours d'une rotation. Cette largeur L est, de préférence, suffisante pour couvrir au moins partiellement l'arête de coupe de trois contre-couteaux. De tels couteaux sont, de préférence, installés dans une position symétrique par rapport à un groupe de trois contre-couteaux.

En projection sur un plan perpendiculaire XX, les arêtes de coupe 433, 433A, 433B occupent globalement de préférence un angle de 360° ou plus et, dans ce dernier cas, les extrémités des arêtes de coupe se chevauchent en projection axiale. Comme déjà indiqué, l'arête extérieure 433 de la tranche des lames est au moins partiellement hélicoïdale dans la partie des traverses 432. Cette tranche correspond à une surface en forme de ruban hélicoïdal appartenant à la surface cylindrique de référence E (figure 5B). Le couteau 40 glisse par cette surface sur le ou les contre-couteaux. L'arête de coupe 433A ou 433B est constituée par la jonction de cette surface 433 et de la surface latérale de la traverse 432. Dans un plan localement perpendiculaire à la traverse 432, ces deux surfaces se rejoignent sensiblement à angle droit. Il est également souligné que le tracé irrégulier des arêtes de coupe de cette figure est dû au procédé de dessin assisté par ordinateur.

Le couteau 40 a une structure offrant de bonnes caractéristiques de symétrie tant par rapport à un plan médian perpendiculaire à l'axe XX que dans le sens périphérique, par la répartition régulière des éléments 43 de préférence au nombre de trois. Cette régularité de structure assure un bon équilibre dynamique des masses, sans balourd et ainsi sans engendrer de vibrations pendant le fonctionnement.

Selon l'invention, les couteaux voisins sont orientés dans le même sens de façon à permettre, le cas échéant, l'imbrication des éléments de couteau 43 et la formation de couloirs hélicoïdaux, voire la composition de filets hélicoïdaux si l'intervalle entre les couteaux est égal à la largeur des couteaux.En général, tous les couteaux d'un rotor ou d'une moitié de rotor, symétrique, ont la même orientation angulaire par rapport à l'axe XX et se correspondent ainsi par translation. Cette position est définie par le moyen d'assemblage tel qu'un assemblage à clavette entre l'arbre du rotor et les moyeux des couteaux. Mais il est également possible de prévoir un indexage permettant de modifier l'orientation d'un couteau à l'autre suivant l'axe XX pour répartir les phases de coupe ou de coopération d'un couteau et d'un ou plusieurs contre-couteaux sur un tour du rotor.

Si comme cela sera vu ultérieurement, le rotor doit diriger les produits coupés vers le plan médian de la machine, il sera composé de couteaux modulaires ayant l'orientation des couteaux 40 de la figure 6 et assemblés en un premier ensemble ainsi que de couteaux d'orientation symétrique formant un deuxième ensemble. Ce type de réalisation simplifie considérablement la fabrication d'un rotor puisqu'il se compose seulement d'un ou deux types de couteaux modulaires. L'entretien de la machine et le remplacement de couteaux abîmés sera également simplifié de façon importante.

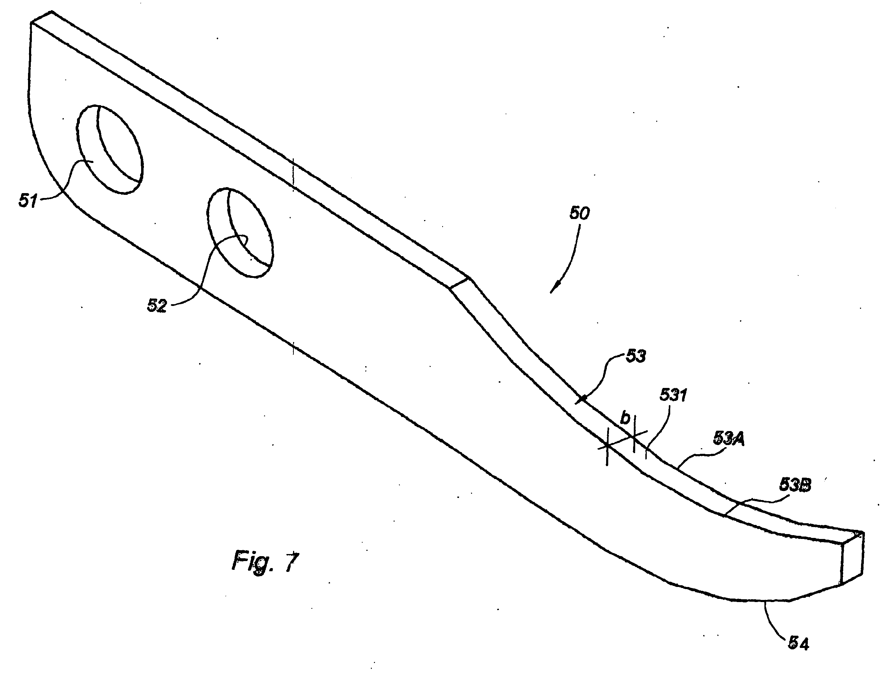

La figure 7 est une vue en perspective d'un mode de réalisation d'un contre-couteau 50. Il est formé par une lame rectangulaire dont l'extrémité arrière comporte deux orifices 51, 52 pour l'assemblage sur des tiges de support assurant la fixation et l'écartement des contre couteaux formant le stator 2.

Le bord supérieur avant de cette lame comporte une découpe en arc de cercle de rayon égal à celui de la surface cylindrique de référence E et constituant l'arête de coupe 53. La partie avant de la lame présente un bord inférieur 54 courbe formant un patin pour passer sur d'éventuels obstacles trouvés sur le sol.

Dans cet exemple, la bande surface 531 d'épaisseur (b) de la lame fait partie de la surface cylindrique de référence E et elle est en contact avec la surface de la tranche du couteau, par exemple 433 (figure 6) des éléments 43. Dans ce cas, l'arête de coupe du contre-couteau 50 sera l'une des arêtes 53A, 53B suivant l'orientation du couteau et son sens de rotation.

De même, l'arête de coupe effective du couteau 40 sera l'arête 433A ou 433B de la tranche du couteau 40 ou de ses éléments 43, suivant l'orientation et le sens de rotation du couteau autour de l'axe XX (voir figure 6). Cette distinction entre les arêtes de coupe 433 ou 53 prises globalement et leurs arêtes de coupe effectives 433A, 433B ou 53A, 53B ne sera plus faite dans la suite pour ne pas compliquer les dessins et la description.

La figure 8 montre en perspective un autre mode de réalisation d'un contre-couteau 60 pour un stator 2. Ce contre-couteau est réalisée à partir d'une pièce rectangulaire dont la partie arrière comporte deux perçages de montage 61, 62 pour former le stator 2.

L'avant est muni d'une arête de coupe 63 épousant la surface cylindrique de référence E ; le bord inférieur avant 64 est courbe pour passer sur les obstacles placés sur le sol.

A la différence du contre-couteau 50, celui-ci comporte une partie avant au niveau de l'arête de coupe ayant des ondulations transversales 65, 66, 67 de part et d'autre du plan de la lame formant le contre-couteau 60.

Dans ce mode de réalisation du contre-couteau 60, l'arête de coupe 63 épouse la surface cylindrique de référence une fois les bossages 65, 66, 67 réalisés.

Le fonctionnement de l'ensemble rotor/stator décrit à l'aide de ses éléments constitutifs est simple. L'ensemble rotor/stator se déplace perpendiculairement à la direction de l'axe X-X sur la surface à couper. Les produits en tige arrivent dans les intervalles des contre-couteaux pour être poussés transversalement contre ceux-ci par les couteaux et être coupés tout en étant également entraînés par le rotor selon la direction d'inclinaison des couteaux.

Suivant le « pas » de la forme hélicoïdale des arêtes de coupe des couteaux et le « pas » ou intervalle des contre couteaux, une arête de coupe d'un couteau sera associée à plusieurs arêtes de coupe de contre-couteaux.

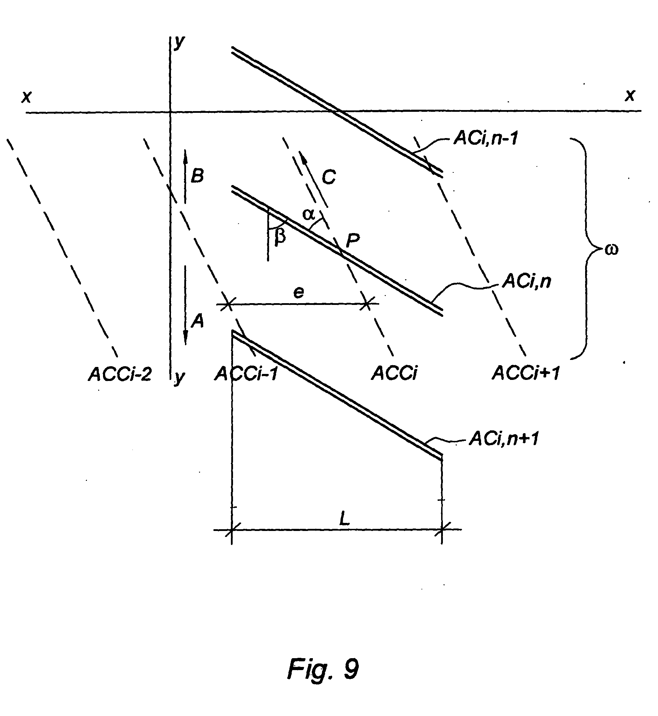

Le fonctionnement de principe du mécanisme de coupe sera décrit ci-après à l'aide de la figure 9 montrant schématiquement une vue déroulée du rotor et du stator.

Pour faciliter la présentation, les références utilisées pour désigner les couteaux et les contre couteaux sont des références alphanumériques.

La figure montre la direction XX de l'axe du rotor (direction transversale) et la direction de déplacement YY (direction longitudinale).

Le stator se compose d'un empilage de contre couteaux répartis dans la direction transversale XX figurés seulement par leurs arêtes de coupe ACCi-2, ACCi-1, ACCi, ACCi+1.

Par convention et pour faciliter les explications, les contre-couteaux sont représentés inclinés par rapport à la direction de l'axe XX et non exactement perpendiculaires à cette direction. Mais il s'agit, dans cette représentation, de la disposition locale d'un contre-couteau ou de son arête de coupe par rapport à celle des couteaux. Globalement les contre-couteaux sont des lames perpendiculaires ou sensiblement perpendiculaires à l'axe XX et placées debout, les arêtes de coupe étant formées par ou sur les tranches des lames.

Un seul couteau a été représenté ; il est composé de ses éléments dont les arêtes de coupe ACi,n+1 ; ACi,n ; Aci, n-1 se suivent dans la direction longitudinale YY.

Le mouvement de déplacement de l'ensemble rotor/stator se fait dans le sens de la flèche A suivant l'axe longitudinal YY alors que les arêtes de coupe Aci, n ... se déplacent dans la direction opposée B.

L'arête de coupe Aci, n rencontre l'arête de coupe ACCi au point d'intersection P qui se déplace le long de l'arête de coupe ACCi pendant la rotation du rotor. Le contact se poursuit dans la plage angulaire ω (figure 5A) définie pour le contact rotor/stator.

Les deux arêtes de coupe ACCi, ACin font au moins au voisinage du point de contact P, un angle α non nul et l'arête de coupe ACCi du contre-couteau CCi fait un angle β par rapport à la direction YY perpendiculaire à la direction de l'axe XX. L'angle β est un angle non nul et très inférieur à 90°. Selon l'invention cet angle β est un angle relativement petit. L'angle α peut être constant comme dans la figure 9 représentant un contre-couteau droit comme celui de la figure 7, alors que dans le cas du contre-couteau ondulé selon la figure 8, cet angle varie.

La figure 9 montre également la « largeur » (L) d'un couteau ou de son arête de coupe au sens défini ci-dessus en relation avec la figure 6 ou encore la distance (e) entre deux contre-couteaux.

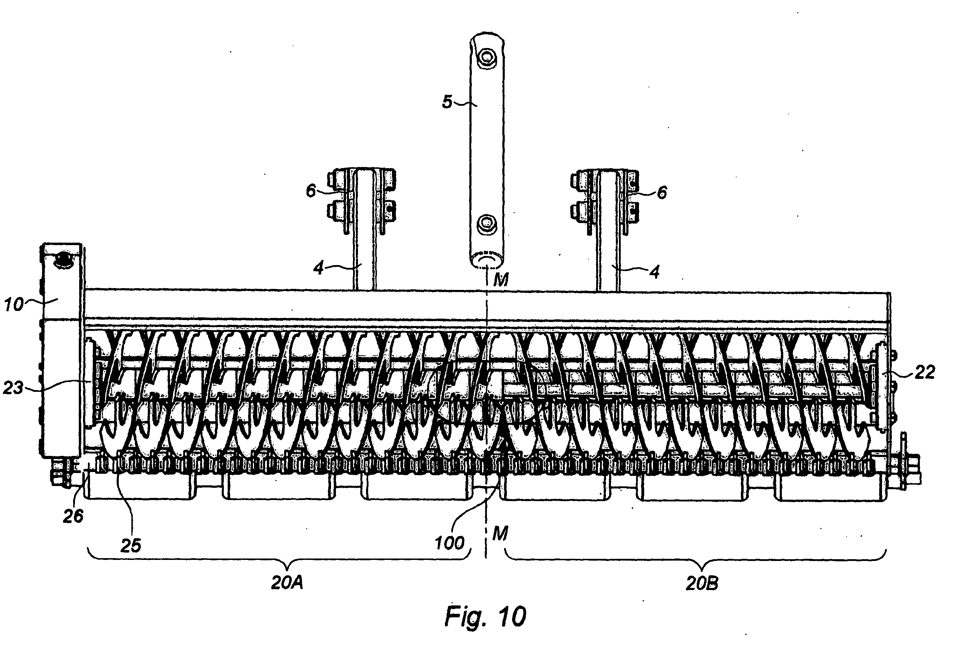

La figure 10 est une vue de face d'une variante de machine selon l'invention. Cette variante diffère de celle de la figure 2 par la disposition de certains couteaux du rotor 100.

Les couteaux du rotor sont répartis en deux ensembles symétriques 20A, 20B par rapport au plan médian MM. Selon le sens de rotation du rotor, les couteaux 20A du côté gauche (selon l'orientation de la figure 10) sont inclinés en direction du plan médian MM. Il en est de même des couteaux 20B du côté droit inclinés symétriquement. Dans ces conditions les couteaux du rotor du côté gauche et ceux du côté droit communiquent aux produits coupés, des impulsions de mouvement déplaçant ces produits vers le plan médian pour leur évacuation à travers l'orifice de sortie relié éventuellement à un aspirateur débouchant dans un collecteur.

Les autres éléments de cette machine sont les mêmes que ceux du mode de réalisation précédent et portent les mêmes références ; leur description ne sera pas reprise.

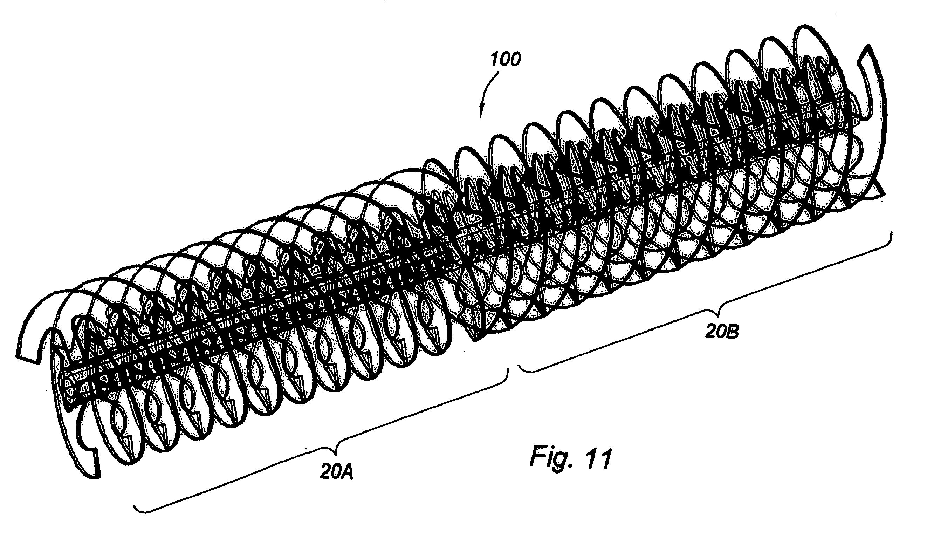

La figure 11 montre un rotor 100 correspondant à la machine de la figure 10. Cette figure laisse apparaître la forme modulaire du rotor. Dans la partie gauche les couteaux 20A sont orientés dans une certaine direction et forment des tracés sensiblement hélicoïdaux. Dans la partie droite de la figure 10 les couteaux 20B sont orientés en sens opposé. L'ensemble de ces couteaux du côté droit forme également des arêtes de coupe en hélice. Comme chaque couteau se compose de trois éléments ayant à chaque fois tous la même orientation, on aura trois filets hélicoïdaux pour la partie gauche et trois filets hélicoïdaux pour la partie droite.

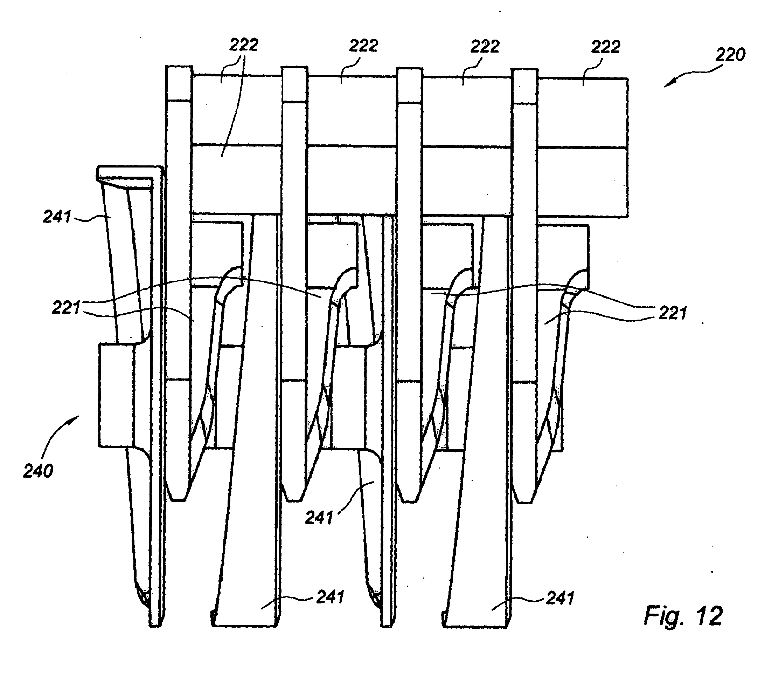

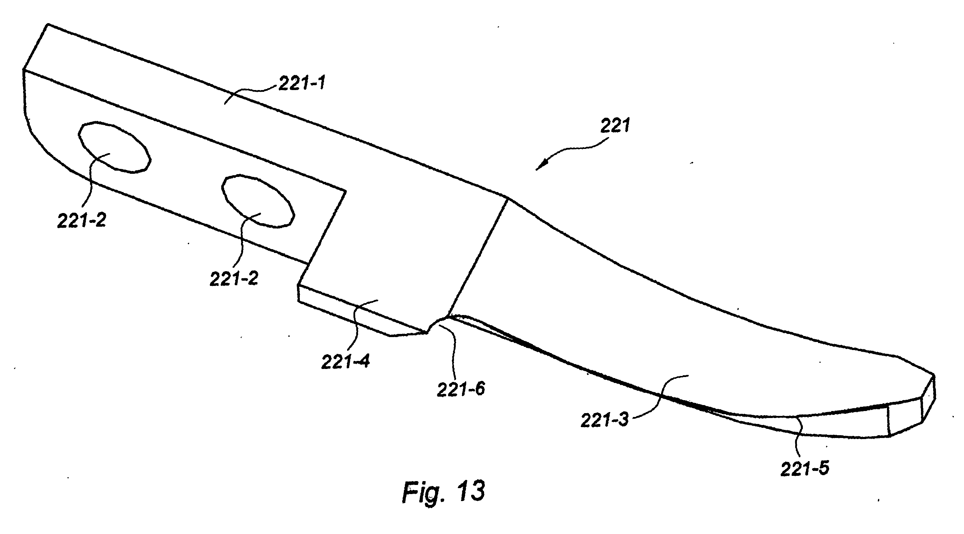

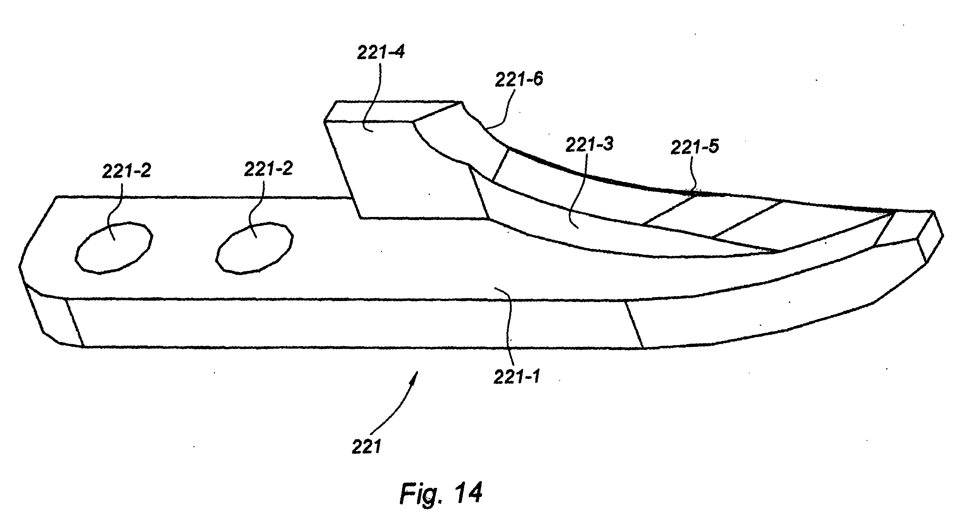

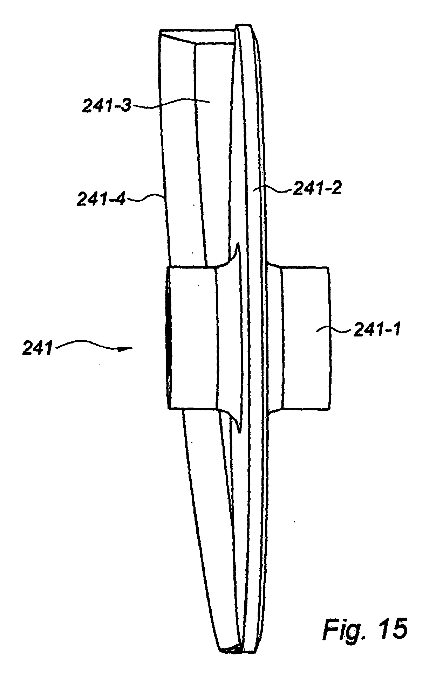

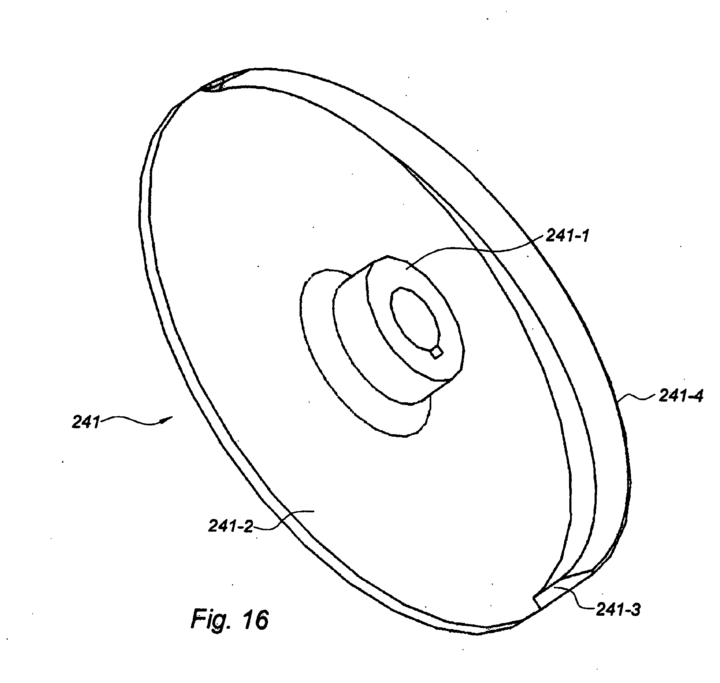

La figure 12 montre en vue de dessous une autre variante de réalisation limitée à quatre contre-couteaux 221 d'un stator 220 et les couteaux 241 d'un rotor 240. Les couteaux 241 sont décalés angulaire-ment sur l'axe du rotor 240. Comme cette vue est un extrait d'un ensemble couteaux/contre-couteaux, à gauche apparaît un couteau 241 sans son contre-couteau et à droite, apparaît seulement un contre-couteau 221 sans son couteau. Les contre-couteaux 221 sont assemblés avec interposition d'éléments intercalaires 222. Un tel contre couteau 221 est représenté aux figures 13, 14 et un couteau aux figures 15, 16.

Cet ensemble stator/rotor 220, 240 est destiné à la coupe de tiges résistantes comme des branchages pour une utilisation de la machine comme taille-haie ou débroussailleuse.

Selon la figure 13, le contre-couteau 221 est formé d'une lame 221-1 dans sa partie arrière munie de deux orifices de fixation 221-2 et dans sa partie avant, l'arête de coupe est renforcée dans la direction transversale par une branche 221-3 terminée par un talon 221-4. La branche 221-3 présente une surface courbe cylindrique faisant partie de la surface cylindrique de référence (E). L'arête de coupe 221-5 est constituée ici par une arête affûtée comme cela apparaît à la figure 14. Cette arête de coupe, incurvée, se termine par une partie arrière formant une butée de coupe 221-6 pour garantir la coupe complète des tiges résistantes.

Les figures 15, 16 montrent une forme de couteau 241 adaptée au contre-couteau 221.

Ce couteau 241 se compose d'un moyeu 241-1 portant un disque 241-2 perpendiculaire à l'axe du moyeu, bordé par une surface périphérique circulaire 241-3, munie d'une arête de coupe 241-4. Cette arête de coupe est inclinée et correspond par exemple à un segment d'hélice sur la surface cylindrique de référence (E).

Dans l'exemple des figures 12 à 16, l'arête de coupe 241-4 du couteau 241 et celle 221-5 du contre -couteau 221 sont constituées chacune par un bord affûté et non plus par l'arête de la tranche de la lame constituant le couteau 40 ou le contre-couteau 50, 60 des exemples précédents. Mais ces arêtes de coupe font toujours partie de la surface de référence E. Il en est de même nécessairement de la surface de la branche 221-3 du contre-couteau et celle de la surface périphérique 241-3 du couteau de façon que, malgré l'affûtage nécessaire des couteaux et des contre-couteaux, leur arête de coupe reste toujours contenue dans la surface cylindrique circulaire de référence E.

## Revendications

1. Machine de coupe de végétaux en tiges,
comportant
un mécanisme de coupe formé d'une rotor porte-couteaux (1) entraîné en rotation autour d'un axe, coopérant avec un stator (2),
* le rotor (1) portant un ensemble de couteaux (20) dont l'arête de coupe est formée par au moins un segment de courbe appartenant à une surface cylindrique de référence (E), de section circulaire, coaxiale (XX) au rotor (1) et
* le stator comportant un ensemble de contre-couteaux avec une arête de coupe au moins en partie formée d'un segment de courbe appartenant à la surface cylindrique de référence (E), l'intervalle entre les contre-couteaux (25) étant ouvert dans le sens de déplacement de la machine par rapport aux végétaux à couper dont les tiges arrivent entre les contre-couteaux (25),
**caractérisée en ce que**
- le stator (2) est un peigne comportant un ensemble de contre-couteaux (25), formés chacun d'une lame sensiblement perpendiculaire à l'axe du rotor et dont la tranche a une arête de coupe au moins en partie formée d'un segment de courbe appartenant à la surface cylindrique de référence (E),
- les arêtes de coupe des couteaux (20) et de leurs contre-couteaux (25) ayant, au cours de la rotation du rotor (1), au moins un contact ponctuel (P) et, au moins localement autour de ce point de contact, en amont et en aval, les arêtes de coupe font un angle α fixe non nul avec les contre-couteaux (25),
- l'arête de couteau faisant un angle β non nul et inférieur à 90° par rapport à la direction d'avance (YY°,
- les contre-couteaux (25) sont écartés d'une distance (e) inférieure à la largeur (L) d'un couteau.

2. Machine selon la revendication 1,
**caractérisée en ce que**
l'arrête de coupe (433) du couteau (40) est plate et constituée par le bord de la tranche correspondant à l'épaisseur de la lame du couteau (40), appartenant à la surface cylindrique de référence (E).

3. Machine selon la revendication 1,
**caractérisée en ce que**
un couteau (40) ou élément de couteau (43) rencontre au moins trois contre-couteaux.

4. Machine selon la revendication 3,
**caractérisée en ce que**
le couteau (40) a un moyeu (41) de longueur axiale (P) inférieure à sa largeur (L) et deux couteaux successifs sont montés sur le rotor, moyeu contre moyeu.

5. Machine selon la revendication 1,
**caractérisée en ce que**
le rotor (1) a une structure modulaire formée d'un arbre entraîné en rotation et portant un ensemble de couteaux (20, 40) emmanchés sur l'arbre et solidaires en rotation de celui-ci.

6. Machine selon la revendication 5,
**caractérisée en ce que**
la liaison solidaire en rotation entre l'arbre et les couteaux (20, 40) est une liaison à clavette entre au moins certains couteaux et l'arbre du rotor.

7. Machine selon la revendication 5,
**caractérisée en ce qu'**
un couteau (40) est formé d'un moyeu (41) portant au moins un élément (43) muni d'une arête de coupe (433, 433A, 433B).

8. Machine selon la revendication 1,
**caractérisée en ce que**
le rotor comporte deux ensemble de couteaux (20A, 20B) dont l'inclinaison relative par rapport aux contre-couteaux est opposée, ces deux ensembles étant de préférence situés de part et d'autre du plan médian (MM) de la machine et symétriquement par rapport à ce plan médian.

9. Machine selon la revendication 7,
**caractérisée en ce qu'**
un couteau (40) comporte plusieurs éléments (43) identiques ayant chacun une arête de coupe (433) et répartis de manière équiangulaire sur le moyeu (41).

10. Machine selon la revendication 7,
**caractérisée en ce qu'**
un couteau (40) comporte trois éléments de couteaux (43) qui occupent au moins toute la périphérie.

11. Machine selon la revendication 7,
**caractérisée en ce que**
l'élément (43) a une forme de T dont le montant (431) est relié au moyeu (41) et la traverse (432) porte l'arête de coupe (433).

12. Machine selon la revendication 7,
**caractérisée en ce que**
le couteau (241) est formé d'un disque (241-2) porté par un moyeu (241-1) et muni d'une paroi périphérique (241-3) bordant le disque dont l'un des côtés a un tracé en biais notamment hélicoïdal pour former une arête de coupe (241-4).

13. Machine selon la revendication 1,
**caractérisée en ce que**
le contre-couteau (50) est formé d'une lame munie d'orifices d'assemblage (51, 52) sur des tiges de support et des organes d'écartement du stator (2) et le bord supérieur a une découpe en arc de cercle formant l'arête de coupe (53).

14. Machine selon la revendication 1,
**caractérisée en ce que**
le contre-couteau (60) est formé d'une lame munie d'orifices d'assemblage (61, 62) sur des tiges de support et des organes d'écartement du stator (2) et le bord supérieur a une découpe en arc de cercle formant l'arête de coupe (63), la lame ayant des ondulations (65, 66, 67) dans la partie formant l'arête de coupe (63).

## Claims

1. Machine for mowing haulm-type plants
comprising
a cutting mechanism formed by a cutter-bearing rotor (1) driven in rotation about an axis, co-operating with a stator (2),
* the rotor (1) bearing a set of cutters (20), the edge of which is formed by at least one curved segment conforming to a cylindrical reference surface (E) of circular section, coaxial (XX) with the rotor (1) and
* the stator comprising a set of counter-cutters with a cutting edge at least partially formed by a curved segment conforming to the cylindrical reference surface (E), the gap between the counter-cutters (25) being open in the direction in which the machine is displaced with respect to the plants to be cut, the haulms of which move between the counter-cutters (25),
**characterised in that**
- the stator (2) is a comb comprising a set of counter-cutters (25), each formed by a blade substantially perpendicular to the axis of the rotor and the edge of which has a cutting edge at least partially formed by a curved segment conforming to the cylindrical reference surface (E),
- the cutting edges of the cutters (20) and their counter-cutters (25) establish at least a local contact (P) during the rotation of the rotor (1) and the cutting edges subtend a fixed angle α that is not zero with the counter-cutters (25), at least locally around this contact point, upstream and downstream,
- the cutting edge subtends an angle β that is not zero and less than 90° with respect to the forward direction (YY°,
- the counter-cutters (25) are spaced apart by a distance (e) that is shorter than the width (L) of a cutter.

2. Machine as claimed in claim 1,
**characterised in that**
the cutting edge (433) of the cutter (40) is flat and formed by the cutting edge corresponding to the thickness of the blade of the cutter (40) conforming to the cylindrical reference surface (E).

3. Machine as claimed in claim 1,
**characterised in that**
a cutter (40) or cutter element (43) encounters at least three counter-cutters.

4. Machine as claimed in claim 3,
**characterised in that**
the cutter (40) has a hub (41) with an axial length (P) that is shorter than its width (L) and two successive cutters are mounted on the rotor, hub against hub.

5. Machine as claimed in claim 1,
**characterised in that**
the rotor (1) is of a modular structure formed by a shaft driven in rotation and bearing a set of cutters (20, 40) mounted on the shaft and integral therewith in rotation.

6. Machine as claimed in claim 5,
**characterised in that** the integral link between the shaft and the cutters (20, 40) in rotation is a key link between at least certain cutters and the shaft of the rotor.

7. Machine as claimed in claim 5,
**characterised in that**
a cutter (40) is formed by a hub (41) bearing at least one element (43) incorporating a cutting edge (433, 433A, 433B).

8. Machine as claimed in claim 1,
**characterised in that**
the rotor has two sets of cutters (20A, 20B), the relative inclination of which is opposite that of the counter-cutters, these two sets preferably being disposed on either side of the median plane (MM) of the machine and symmetrically with respect to this median plane.

9. Machine as claimed in claim 7,
**characterised in that**
a cutter (40) comprises several identical elements (43), each having a cutting edge (433), and distributed at identical angles on the hub (41).

10. Machine as claimed in claim 7,
**characterised in that** a cutter (40) has three cutter elements (43) which occupy at least the entire periphery.

11. Machine as claimed in claim 7,
**characterised in that**
the element (43) is T-shaped and the upright (431) is linked to the hub (41) and the cross-piece (432) bears the cutting edge (433).

12. Machine as claimed in claim 7,
**characterised in that**
the cutter (241) is in the shape of a disc (241-2) borne by a hub (241-1) and has a peripheral wall (241-3) constituting a flange of the disc, one of the sides of which has a skewed, in particular helical, contour in order to form a cutting edge (241-4).

13. Machine as claimed in claim 1,
**characterised in that**
the counter-cutter (50) is provided in the form of a blade incorporating mounting orifices (51, 52) in support stems and elements for spacing it apart from the stator (2), and the top edge has a cut-out in the shape of a circular arc forming the cutting edge (53).

14. Machine as claimed in claim 1,
**characterised in that**
the counter-cutter (60) is formed by a blade incorporating mounting orifices (61, 62) in support stems and elements for spacing it apart from the stator (2), and the top edge has a cut-out in the shape of a circular arc forming the cutting edge (63), the blade having undulations (65, 66, 67) in the part constituting the cutting edge (63).

## Patentansprüche

1. Mähmaschine für halmähnliche Gewächse, umfassend
einen Schneidmechanismus, der von einem Messer tragenden Rotor (1) gebildet ist, der in Drehung um eine Achse angeordnet ist und mit einem Stator (2) zusammenwirkt,
* wobei der Rotor (1) eine Gesamtheit von Messern (20) trägt, deren Schneidkante von mindestens einem gekrümmten Segment gebildet ist, das einer zylindrischen Bezugfläche (E) mit kreisförmigem, zum Rotor (1) koaxialem (XX) Querschnitt angehört, und
* wobei der Stator eine Gesamtheit von Gegenmessern mit einer Schneidkante umfasst, die mindestens zum Teil von einem gekrümmten Segment gebildet ist, das der zylindrischen Bezugsfläche (E) angehört, wobei der Abstand zwischen den Gegenmessern (25) in Verschieberichtung der Maschine in Bezug zu den zu schneidenden Pflanzen, deren Halme zwischen die Gegenmesser (25) gelangen, offen ist.
**dadurch gekennzeichnet, dass**
- der Stator (2) ein Kamm ist, der eine Gesamtheit von Gegenmessern (25) umfasst, die jeweils von einem im Wesentlichen auf die Achse des Rotors senkrechten Schneidblatt gebildet sind und deren Schneide eine Schneidkante hat, die mindestens zum Teil von einem gekrümmten Segment gebildet ist, die der zylindrischen Bezugsfläche (E) angehört,
- die Schneidkanten der Messer (20) und ihrer Gegenmesser (25) während der Drehung des Rotors (1) mindestens einen punktuellen Kontakt (P) haben, und mindestens lokal um diesen Kontaktpunkt stromaufwärts nach stromabwärts die Schneidkanten einen festen Winkel α ungleich Null mit den Gegenmessern (25) bilden,
- die Messerkante einen Winkel β ungleich Null und kleiner als 90° zur Vorschubrichtung (YY) bildet,
- die Gegenmesser (25) um einen Abstand (e) kleiner als die Breite (L) des Messers voneinander entfernt sind.

2. Maschine nach Anspruch 1,
**dadurch gekennzeichnet, dass**
die Schneidkante (433) des Messers (40) flach und vom Rand des der Dicke des Schneidblattes des Messers (40) entsprechenden Abschnitts, der der zylindrischen Bezugsfläche (E) angehört, gebildet ist.

3. Maschine nach Anspruch 1,
**dadurch gekennzeichnet, dass**
ein Messer (40) oder Messerelement (43) auf mindestens drei Gegenmesser trifft.

4. Maschine nach Anspruch 3,
das Messer (40) eine Nabe (41) mit einer geringeren Axiallänge (P) als seine Breite (L) hat, und dass zwei aufeinander folgende Messer auf dem Rotor, Nabe an Nabe, montiert sind.

5. Maschine nach Anspruch 1,
**dadurch gekennzeichnet, dass**
der Rotor (1) eine Modulstruktur hat, die von einer Welle gebildet ist, die in Drehung angetrieben wird und eine Gesamtheit von Messern (20, 40) trägt, die auf die Welle gesteckt und mit dieser drehfest verbunden sind.

6. Maschine nach Anspruch 5,
**dadurch gekennzeichnet, dass**
die drehfest Verbindung zwischen der Welle und den Messern (20, 40) eine Keilverbindung zwischen mindestens gewissen Messern und der Welle des Rotors ist.

7. Maschine nach Anspruch 5,
**dadurch gekennzeichnet, dass**
ein Messer (40) von einer Nabe (41) gebildet ist, die mindestens ein Element (43) trägt, das mit einer Schneidkante (433, 433A, 433B) versehen ist.

8. Maschine nach Anspruch 1,
**dadurch gekennzeichnet, dass**
der Rotor zwei Messereinheiten (20A, 20B) umfasst, deren relative Neigung zu den Gegenmessern entgegen gesetzt ist, wobei diese beiden Einheiten vorzugsweise beiderseits der Mittelebene (MM) der Maschine und symmetrisch zu dieser Mittelebene angeordnet sind.

9. Maschine nach Anspruch 7,
**dadurch gekennzeichnet, dass**
ein Messer (40) mehrere identische Elemente (43) umfasst, die jeweils eine Schneidkante (433) aufweisen und in gleichen Winkeln auf der Nabe (41) angeordnet sind.

10. Maschine nach Anspruch 7,
**dadurch gekennzeichnet, dass**
ein Messer (40) drei Messerelemente (43) umfasst, die mindestens die gesamte Peripherie einnehmen.

11. Maschine nach Anspruch 7,
**dadurch gekennzeichnet, dass**
das Element (43) eine T-Form hat, dessen Ständer (431) mit der Nabe (41) verbunden ist, und dessen Querstrebe (432) die Schneidkante (433) trägt.

12. Maschine nach Anspruch 7,
**dadurch gekennzeichnet, dass**
das Messer (241) von einer Scheibe (241-2) gebildet ist, die von einer Nabe (241-1) getragen wird und mit einer Umfangswand (241-3) versehen ist, die die Scheibe umrahmt, deren eine Seite eine schräge, insbesondere spiralförmige Linienführung hat, um eine Schneidkante (241-4) zu bilden.

13. Maschine nach Anspruch 1,
**dadurch gekennzeichnet, dass**
das Gegenmesser (50) von einem Schneidblatt gebildet ist, das mit Öffnungen (51, 52) zur Montage auf Stützstangen und Abstandselementen des Stators (2) versehen ist, und dass der obere Rand einen kreisbogenförmigen Ausschnitt hat, der die Schneidkante (53) bildet.

14. Maschine nach Anspruch 1
**dadurch gekennzeichnet, dass**
das Gegenmesser (60) von einem Schneidblatt gebildet ist, das mit Öffnungen (61, 62) zur Montage auf Stützstangen und Abstandselementen des Stators (2) versehen ist, und dass der obere Rand einen kreisbogenförmigen Ausschnitt hat, der die Schneidkante (63) bildet, wobei das Schneidblatt Wellungen (65, 66, 67) in dem die Schneidkante (63) bildenden Teil hat.
